# EUROPEAN PATENT APPLICATION

(11) **EP 4 572 308 A1**
(43) Date of publication of application: **18.06.2025**
(21) Application number: 24218640.1
(22) Date of filing: 10.12.2024
(51) Int. Cl.: H04N 9/31, H04N 21/41

(54) **PROJECTION SYSTEM, PROJECTION APPARATUS, AND METHOD OF CONTROLLING PROJECTION APPARATUS**

(30) Priority: 15.12.2023 US 202363610406 P; 07.02.2024 CN 202410172729
(71) Applicant: Coretronic Corporation, Hsin-Chu 300 (TW)
(72) Inventor: CHUNG, Chih-Yi, Hsin-Chu 300 (TW); CHEN, Ssu-Ming, Hsin-Chu 300 (TW)
(74) Representative: Ter Meer Steinmeister & Partner

(57) **Abstract**

A projection system, a projection apparatus, and a method of controlling a projection apparatus are provided. The method of controlling the projection apparatus includes: receiving schedule data through an artificial intelligence model from the projection apparatus or a terminal apparatus; generating at least one of a standard command and a personalized picture through the artificial intelligence model according to the schedule data and a rule command; executing an operation corresponding to the schedule data through the projection apparatus according to the standard command after receiving the standard command through the projection apparatus; and projecting the personalized picture through the projection apparatus after receiving the personalized picture through the projection apparatus.

## Description

This application claims priority of U.S. provisional application serial no. 63/610,406, filed on December 15, 2023, and China application serial no. 202410172729.0, filed on February 4, 2024.

### BACKGROUND

### Technical Field

The disclosure relates to a display technology, and in particular to a projection system, a projection apparatus, and a method of controlling the projection apparatus.

### Description of Related Art

Generally speaking, the control manner of a projection apparatus (projector) is mostly performed by a user manually operating a remote control of the projection apparatus or operating a human-machine interface on the projection apparatus. Therefore, the traditional control manner of the projection apparatus is quite inconvenient.

The user needs to have relevant knowledge of the projection apparatus. For example, when adjusting functions of the projection apparatus by the remote control, the user needs to learn the meanings of items on the menu of the projection apparatus and how to adjust the operation settings of the projection apparatus according to usage situations, and the user needs to manually adjust the operation settings of the projection apparatus. Therefore, the conventional manner of adjusting the operation settings of the projection apparatus is inconvenient.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the disclosure was acknowledged by a person of ordinary skill in the art.

### SUMMARY

The disclosure provides a projection system, a projection apparatus, and a method of controlling the projection apparatus, which can provide a personalized reminder service.

Other objectives, features and advantages of the disclosure will be further understood from the further technological features disclosed by the embodiments of the disclosure wherein there are shown and described preferred embodiments of this invention, simply by way of illustration of modes best suited to carry out the invention.

The object is solved by the features of the independent claims. Preferred embodiments are given in the dependent claims.

In order to achieve one, a part, or all of the above objectives or other objectives, a method of controlling a projection apparatus of the disclosure includes the following steps. Schedule data is received through an artificial intelligence model from the projection apparatus or a terminal apparatus. At least one of a standard command and a personalized picture is generated through the artificial intelligence model according to the schedule data and a rule command. An operation corresponding to the schedule data is executed through the projection apparatus according to the standard command after receiving the standard command through the projection apparatus. The personalized picture is projected through the projection apparatus after receiving the personalized picture through the projection apparatus.

In order to achieve one, a part, or all of the above objectives or other objectives, a projection system of the disclosure includes a projection apparatus, a terminal apparatus, and an artificial intelligence model. The artificial intelligence model is respectively communicatively connected to the projection apparatus and the terminal apparatus. The artificial intelligence model is configured to receive schedule data from the projection apparatus or the terminal apparatus, and generate at least one of a standard command and a personalized picture according to the schedule data and a rule command. In response to the projection apparatus receiving the standard command, the projection apparatus is configured to execute an operation corresponding to the schedule data according to the standard command. In response to the projection apparatus receiving the personalized picture, the projection apparatus is configured to project the personalized picture.

In order to achieve one, a part, or all of the above objectives or other objectives, a projection apparatus of the disclosure includes a projection module, a communication interface, and at least one processor. The communication interface is configured to obtain schedule data and is configured to receive at least one of a standard command and a personalized picture corresponding to the schedule data. The schedule data includes a schedule time. The at least one processor is electrically connected to the communication interface and the projection module, and is configured to execute the following operations. An operation corresponding to the schedule data is executed at the schedule time according to the standard command. The projection module is driven to project the personalized picture at the schedule time according to the personalized picture.

In one or more embodiments, receiving the schedule data through the artificial intelligence model from the projection apparatus or the terminal apparatus may comprise: transmitting the schedule data to a cloud server through the projection apparatus or the terminal apparatus, wherein the cloud server stores the rule command; and transmitting the schedule data and the rule command to the artificial intelligence model through the cloud server.

In one or more embodiments, the artificial intelligence model may comprise a natural language model and a picture generation model.

In one or more embodiments, the rule command may comprise a first rule command and a second rule command.

In one or more embodiments, generating at least one of the standard command and the personalized picture through the artificial intelligence model according to the schedule data and the rule command may further comprise: generating the standard command through the natural language model according to the schedule data and the first rule command; and generating the personalized picture through the picture generation model according to the schedule data and the second rule command.

In one or more embodiments, generating at least one of the standard command and the personalized picture through the artificial intelligence model according to the schedule data and the rule command may further comprise: generating the standard command corresponding to a reminder item through the natural language model according to the schedule data and the first rule command; and generating the personalized picture through the picture generation model according to the reminder item, the schedule data, and the second rule command.

In one or more embodiments, the schedule data may comprise a schedule time.

In one or more embodiments, the method of controlling the projection apparatus may further comprise receiving the standard command and the personalized picture through a cloud server; and transmitting the standard command and the personalized picture to the projection apparatus at the schedule time corresponding to the schedule data through the cloud server.

In one or more embodiments, the schedule data may comprise at least one of an alarm event and a schedule event.

In one or more embodiments, generating at least one of the standard command and the personalized picture through the artificial intelligence model according to the schedule data and the rule command may further comprise generating a first standard command and a first picture corresponding to the alarm event through the artificial intelligence model according to the alarm event and the rule command; and generating a second standard command and a second picture corresponding to the schedule event through the artificial intelligence model according to the schedule event and the rule command.

In one or more embodiments, transmitting the standard command and the personalized picture to the projection apparatus at the schedule time corresponding to the schedule data through the cloud server may further comprise: transmitting the first standard command and the first picture to the projection apparatus at a first specified time corresponding to the alarm event through the cloud server, and projecting the first picture and executing a first operation according to the first standard command after receiving the first standard command and the first picture through the projection apparatus, wherein the first operation comprises driving a speaker to emit a sound signal and driving a projection module to adjust a display brightness; and transmitting the second standard command and the second picture to the projection apparatus at a second specified time corresponding to the schedule event through the cloud server, and projecting the second picture and executing a second operation according to the second standard command after receiving the second standard command and the second picture through the projection apparatus, wherein the second operation comprises driving the projection module to adjust the display brightness and projecting a reminder item corresponding to the schedule event.

In one or more embodiments, after the projection apparatus executes the operation according to the standard command, the method may further comprise: transmitting a control signal to the artificial intelligence model through the cloud server after the projection apparatus or the terminal apparatus receives the control signal; generating a third standard command through the artificial intelligence model according to the control signal and the rule command, and transmitting the third standard command to the cloud server; and transmitting the third standard command to the projection apparatus through the cloud server, and executing a third operation according to the third standard command after receiving the third standard command through the projection apparatus.

In one or more embodiments, the method of controlling the projection apparatus may further comprise: obtaining a parameter setting content corresponding to the projection apparatus in each of a plurality of usage states through the artificial intelligence model according to a plurality of historical schedule data; wherein generating the standard command through the artificial intelligence model according to the schedule data and the rule command comprises generating the standard command according to the parameter setting content and the rule command after obtaining the parameter setting content corresponding to one of the usage states consistent with the schedule data through the artificial intelligence model.

In one or more embodiments, the operation may comprises at least one of a wake-up action, an alarm playback action, a brightness adjustment action, a projection mode adjustment action, a reminder item playback action, and a wallpaper changing action.

In one or more embodiments, the method of controlling the projection apparatus may further comprise: transmitting time zone data and state data of the projection apparatus to a cloud server through the projection apparatus or the terminal apparatus; obtaining at least one of weather information and traffic information corresponding to the time zone data through the cloud server according to the received time zone data; and transmitting at least one of the time zone data, the state data, the weather information, and the traffic information to the artificial intelligence model through the cloud server.

In one or more embodiments, generating at least one of the standard command and the personalized picture through the artificial intelligence model according to the schedule data and the rule command may further comprise: generating at least one of the standard command and the personalized picture through the artificial intelligence model according to at least one of the time zone data, the state data, the weather information, and the traffic information, the schedule data, and the rule command.

In one or more embodiments, the method of controlling the projection apparatus may further comprise converting the standard command into a control code through a cloud server after the cloud server receives the standard command from the artificial intelligence model, and transmitting the control code to the projection apparatus; and executing the control code through the projection apparatus after receiving the control code through the projection apparatus, thereby executing the operation corresponding to the schedule data.

In one or more embodiments, the method of controlling the projection apparatus may further comprise obtaining a specific behavior performed by a user at a specific time in the artificial intelligence model according to a plurality of historical schedule data of the user; and in response to the schedule data not comprising the specific behavior at the specific time, generating at least one of the standard command and the personalized picture corresponding to the specific behavior through the artificial intelligence model according to the specific behavior and the rule command after the artificial intelligence model receives the schedule data.

In one or more embodiments, the projection system may further comprise a cloud server, communicatively connected to the artificial intelligence model, the projection apparatus, and the terminal apparatus.

In one or more embodiments, the cloud server may be configured to store the rule command and transmit the rule command and the schedule data from the projection apparatus or the terminal apparatus to the artificial intelligence model.

In one or more embodiments, the rule command may comprise a first rule command and a second rule command.

In one or more embodiments, the artificial intelligence model may comprise: a natural language model, configured to generate the standard command according to the schedule data and the first rule command; and a picture generation model, configured to generate the personalized picture according to the schedule data and the second rule command.

In one or more embodiments, the natural language model may be configured to generate the standard command corresponding to a reminder item according to the schedule data and the first rule command.

In one or more embodiments, the picture generation model may be configured to generate the personalized picture according to the reminder item, the schedule data, and the second rule command.

In one or more embodiments, the schedule data may comprise a schedule time, the projection system may further comprise a cloud server, communicatively connected to the artificial intelligence model and the projection apparatus, wherein the cloud server may be configured to store the rule command and receive the standard command and the personalized picture from the artificial intelligence model, and transmit the standard command and the personalized picture to the projection apparatus at the schedule time corresponding to the schedule data.

In one or more embodiments, the schedule data may comprise at least one of an alarm event and a schedule event, and the projection apparatus comprises a speaker and a projection module.

In one or more embodiments, the artificial intelligence model may be configured to generate a first standard command and a first picture corresponding to the alarm event according to the alarm event and the rule command, and generate a second standard command and a second picture corresponding to the schedule event according to the schedule event and the rule command.

In one or more embodiments, the cloud server may be configured to: transmit the first standard command and the first picture to the projection apparatus at a first specified time corresponding to the alarm event, so that the projection apparatus projects the first picture and executes a first operation according to the first standard command.

In one or more embodiments, the first operation may comprise driving the speaker to emit a sound signal and driving the projection module to adjust a display brightness; and transmit the second standard command and the second picture to the projection apparatus at a second specified time corresponding to the schedule event, so that the projection apparatus projects the second picture and executes a second operation according to the second standard command, wherein the second operation comprises driving the projection module to adjust the display brightness and projecting a reminder item corresponding to the schedule event.

In one or more embodiments, a control signal may be transmitted to the artificial intelligence model through the cloud server after the projection apparatus or the terminal apparatus may receive the control signal.

In one or more embodiments, the artificial intelligence model may be configured to generate a third standard command according to the control signal and the rule command, and may transmit the third standard command to the cloud server.

In one or more embodiments, the cloud server may be configured to transmit the third standard command to the projection apparatus, so that the projection apparatus may execute a third operation according to the third standard command.

In one or more embodiments, the artificial intelligence model may be configured to obtain a parameter setting content corresponding to the projection apparatus in each of a plurality of usage states according to a plurality of historical schedule data; and generate the standard command according to the parameter setting content and the rule command after obtaining the parameter setting content corresponding to one of the usage states consistent with the schedule data.

In one or more embodiments the operation may comprise at least one of a wake-up action, an alarm playback action, a brightness adjustment action, a projection mode adjustment action, a reminder item playback action, and a wallpaper changing action.

In one or more embodiments, the projection system may further comprise a cloud server, communicatively connected to the artificial intelligence model, the projection apparatus, and the terminal apparatus.

In one or more embodiments, the cloud server may be configured to: store the rule command; receive time zone data and state data of the projection apparatus from the projection apparatus or the terminal apparatus; obtain at least one of weather information and traffic information corresponding to the time zone data according to the received time zone data; and transmit at least one of the time zone data, the state data, the weather information, and the traffic information to the artificial intelligence model.

In one or more embodiments, the artificial intelligence model may be configured to generate at least one of the standard command and the personalized picture according to at least one of the time zone data, the state data, the weather information, and the traffic information, the schedule data, and the rule command.

In one or more embodiments, the projection system may further comprise a cloud server, communicatively connected to the artificial intelligence model and the projection apparatus, wherein the cloud server is configured to store the rule command and convert the standard command from the artificial intelligence model into a control code, and transmit the control code to the projection apparatus, so that the projection apparatus executes the control code, thereby executing the operation corresponding to the schedule data.

In one or more embodiments, the artificial intelligence model may be configured to obtain a specific behavior performed by a user at a specific time according to a plurality of historical schedule data of the user; and in response to the schedule data not comprising the specific behavior at the specific time, generate at least one of the standard command and the personalized picture corresponding to the specific behavior according to the specific behavior and the rule command after receiving the schedule data.

Based on the above, the disclosure may provide the personalized reminder service and actively perform a dynamic adjustment based on feedback and the schedule data of a user to provide a more personalized and more effective experience, so as to satisfy requirements of different users.

### BRIEF DESCRIPTION OF THE DRAWINGS

FIG. 1 is a schematic diagram of a projection system of a first embodiment of the disclosure.
FIG. 2 is a schematic diagram of a projection apparatus of the first embodiment of the disclosure.
FIG. 3 is a flowchart of a method of controlling the projection apparatus of the first embodiment of the disclosure.
FIG. 4 is a schematic diagram of a projection system of a second embodiment of the disclosure.
FIG. 5 is a schematic diagram of a projection system of a third embodiment of the disclosure.
FIG. 6 is a schematic diagram of a projection system of a fourth embodiment of the disclosure.
FIG. 7A is a schematic diagram of a personalized picture corresponding to an alarm event according to a fifth embodiment of the disclosure.
FIG. 7B is a schematic diagram of a personalized picture corresponding to a snooze mode according to the fifth embodiment of the disclosure.
FIG. 7C is a schematic diagram of a personalized picture corresponding to a schedule event according to the fifth embodiment of the disclosure.
FIG. 8 is a schematic diagram of a personalized picture of a sixth embodiment of the disclosure.
FIG. 9 is a schematic diagram of a control flow of a projection system according to a seventh embodiment of the disclosure.
FIG. 10 is a schematic diagram of a control flow of a projection system according to an eighth embodiment of the disclosure.

### DESCRIPTION OF THE EMBODIMENTS

It is to be understood that other embodiment may be utilized and structural changes may be made without departing from the scope of the appended claims. Also, it is to be understood that the phraseology and terminology used herein are for the purpose of description and should not be regarded as limiting. The use of "including", "comprising", or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings.

The aforementioned and other technical contents, features, and effects of the disclosure will be clearly presented in the following detailed description of a preferred embodiment with reference to the drawings. Directional terms, such as upper, lower, left, right, front, or rear, mentioned in the following embodiments are only for reference to the directions of the attached drawings. Therefore, the directional terms used are used to illustrate, but not limit, the disclosure.

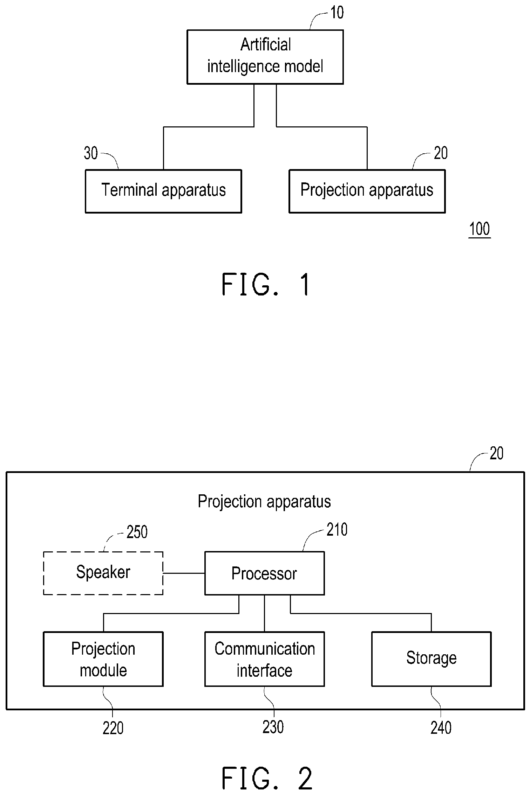

FIG. 1 is a schematic diagram of a projection system according to a first embodiment of the disclosure. Please refer to FIG. 1. A projection system 100 includes an artificial intelligence (AI) model 10, a projection apparatus (projector) 20, and a terminal apparatus 30. The artificial intelligence model 10, the projection apparatus 20, and the terminal apparatus 30 communicate by wired and/or wireless communication manners.

FIG. 2 is a schematic diagram of a projection apparatus according to the first embodiment of the disclosure. Please refer to FIG. 2. The projection apparatus 20 includes a processor 210, a projection module 220, a communication interface 230, and a storage 240, and a speaker 250 is optionally provided. The processor 210 is coupled to the projection module 220, the communication interface 230, the storage 240, and the speaker 250. The number of the processor 210 may be one or more. For convenience of explanation, only one processor 210 is shown here.

The processor 210 may be, for example, a central processing unit (CPU), a physical processing unit (PPU), a programmable microprocessor, an embedded control chip, a digital signal processor (DSP), an application specific integrated circuit (ASIC), or other similar apparatuses, and the processors 210 may be, for example, a combination of the above.

The projection module 220 is configured to project a multimedia content to a projection target (for example, a screen, a desktop, a wall, etc.). The projection module 220 includes components such as an imaging element (for example, a light valve), a projection lens, a light source (such as including a light emitting diode (LED), a laser diode (LD), or a combination of the above), and an optical element for transmitting a light beam (such as including a mirror, a spectroscopic element, etc.).

The communication interface 230 is configured to communicate with other apparatuses or communication networks to transceive signals by the network. The communication interface 230 may include a wired communication interface and/or a wireless communication interface. The wired communication interface may be implemented by adopting a universal serial bus (USB) port, a general purpose interface bus (GPIB) port, a local area network (LAN) port, etc. The wireless communication interface may be implemented by adopting a wireless local area network (WLAN) interface, a cellular network communication interface, a combination thereof, etc.

The storage 240 may be implemented by adopting any type of fixed or removable random access memory (RAM), read-only memory (ROM), flash memory, hard disk, other similar apparatuses, or a combination of the apparatuses. The storage 240 may exist independently and be connected with at least one processor 210 by a communication bus or the storage 240 may be integrated with at least one processor 210. The storage 240 may include one or more code snippets. After being installed, the code snippet is executed by at least one processor 210.

The speaker 250 is, for example, a loudspeaker. In the embodiment, the speaker 250 is disposed in the projection apparatus 20. In other embodiments, the speaker 250 may be an independent apparatus that is communicatively connected to the communication interface 230 of the projection apparatus 20 via a wired transmission interface such as an audio cable or a wireless transmission protocol such as Bluetooth.

In the embodiment, the projection system 100 may provide a function of remotely activating the projection apparatus 20. For example, a user uses the terminal apparatus 30 to control when the projection apparatus 20 is powered on and started up through the local network. The terminal apparatus 30 is, for example, an electronic product with a networking function such as a smart phone, a smart watch, a smart bracelet, a tablet computer, and a notebook computer of the user.

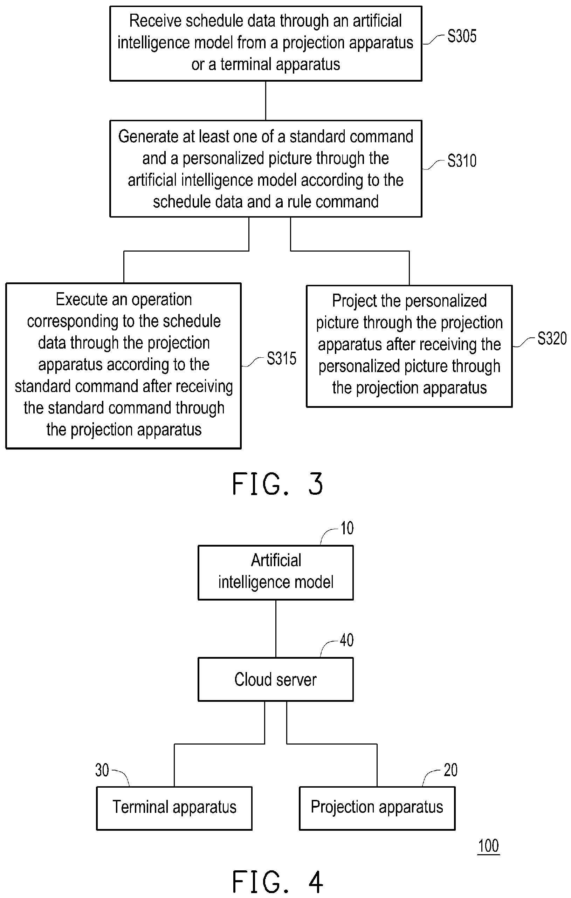

In the embodiment, the artificial intelligence model 10 includes at least one chatbot with a machine learning algorithm. The artificial intelligence model 10 may be disposed in the projection apparatus 20 and coupled with the processor 210 of the projection apparatus 20 or the artificial intelligence model 10 may be disposed in a cloud server. The cloud server or the storage of the projection apparatus 20 is, for example, configured to store the chatbot with the machine learning algorithm. The cloud server or the processor of the projection apparatus 20 is, for example, configured to execute the algorithm to implement a method of controlling a projection apparatus below. FIG. 3 is a flowchart of a method of controlling the projection apparatus according to the first embodiment of the disclosure. Please refer to FIG. 1 to FIG. 3 at the same time. In Step S305, schedule data is received through the artificial intelligence model 10 from the projection apparatus 20 or the terminal apparatus 30. In Step S310, at least one of a standard command and a personalized picture is generated through the artificial intelligence model 10 according to the schedule data and a rule command. The schedule data includes at least one of an alarm event and a schedule event. The personalized picture is, for example, a wallpaper of the projection apparatus 20 (a background image projected through the projection apparatus 20).

In Step S315, an operation corresponding to the schedule data is executed through the processor 210 of the projection apparatus 20 according to the standard command after the projection apparatus 20 receives the standard command. The operation includes at least one of a wake-up action, an alarm playback action, a brightness adjustment action, a projection mode adjustment action, a reminder item playback action, and a wallpaper changing action. In Step S320, the personalized picture is projected through the projection apparatus 20 after the projection apparatus 20 receives the personalized picture.

FIG. 4 is a schematic diagram of a projection system according to a second embodiment of the disclosure. Please refer to FIG. 4. This embodiment is an application example of the first embodiment. The projection system 100 may also include a cloud server 40. The cloud server 40 stores the rule command. The rule command is configured to limit the standard command generated by the artificial intelligence model 10 to conform to the operations executable by the projection apparatus 20 and is configured to limit the personalized picture generated by the artificial intelligence model 10 to correspond to the schedule data. The cloud server 40 is configured to receive at least one of the standard command and the personalized picture from the artificial intelligence model 10.

The cloud server 40 includes a processor, a communication device, and a storage. The storage is, for example, configured to store one or more code snippets, and the processor is, for example, configured to execute the one or more code snippets. The communication device is configured to be communicatively connected to the projection apparatus 20 and the artificial intelligence model 10. In the embodiment, the projection apparatus 20, the artificial intelligence model 10, and the cloud server 40 are implemented by three independent hardware devices, and the artificial intelligence model 10 is, for example, disposed in a third-party server. In other embodiments, the projection apparatus 20 and the cloud server 40 may be integrated into one hardware device.

The projection apparatus 20 or the terminal apparatus 30 is configured to transmit the schedule data to the cloud server 40. Then, the (received) schedule data and the corresponding rule command are transmitted to the artificial intelligence model 10 through the cloud server 40. Afterwards, at least one of the standard command and the personalized picture is generated through the artificial intelligence model 10 according to the schedule data and the rule command, and is transmitted to the cloud server 40.

The schedule data includes a schedule time corresponding to each event (the schedule event and the alarm event). After receiving the standard command and the personalized picture, the cloud server 40 transmits the standard command and the personalized picture to the projection apparatus 20 at the schedule time corresponding to the schedule data.

After receiving the standard command from the artificial intelligence model 10, the cloud server 40 may convert the standard command into a control code and transmit the control code to the projection apparatus 20. The standard command may include an operation to be executed and the schedule time for executing the operation. In an embodiment, the cloud server 40 may convert the operation to be executed in the standard command into the control code executable by the projection apparatus 20, and transmit the control code to the projection apparatus 20 at the schedule time included in the standard command, so that the projection apparatus 20 executes the control code at the schedule time, thereby executing the operation corresponding to the schedule data.

In another embodiment, the cloud server 40 may also transmit at least one of the control code and the personalized picture to the terminal apparatus 30. Then, the terminal apparatus 30 transmits at least one of the control code and the personalized picture to projection apparatus 20 at the schedule time.

In other embodiments, the operation of converting the standard command into the control code may also be executed by the terminal apparatus 30 or the projection apparatus 20.

In an embodiment, the schedule data includes the alarm event, and the schedule time corresponding to the alarm event is, for example, a first specified time. The artificial intelligence model 10 may be configured to generate a first standard command and a first picture corresponding to the alarm event according to the alarm event and the rule command. The cloud server 40 transmits the first standard command and the first picture to the projection apparatus 20 at the first specified time corresponding to the alarm event. The projection apparatus 20 projects the first picture and executes a first operation according to the first standard command after receiving the first standard command and the first picture. The first operation includes, for example, driving the speaker 250 to emit sound signals and driving the projection module 220 to adjust display brightness. The sound signals emitted through the speaker 250 are, for example, from soft to loud, and the display brightness of the projection module 220 is, for example, adjusted from dim to bright.

The schedule data may also include the schedule event, and a schedule time corresponding to the schedule event is, for example, a second specified time. The artificial intelligence model 10 may be configured to generate a second standard command and a second picture corresponding to the schedule event according to the schedule event and the rule command. The cloud server 40 transmits the second standard command and the second picture to the projection apparatus 20 at the second specified time corresponding to the schedule event. The projection apparatus 20 projects the second picture and executes a second operation according to the second standard command after receiving the second standard command and the second picture. The second operation includes, for example, driving the projection module 220 to adjust the display brightness (the brightness adjustment action) and projecting a reminder item (the reminder item playback action) corresponding to the schedule event.

In an embodiment, the user may adopt text control or voice control or may touch a display screen of the projection apparatus 20 (or the terminal apparatus 30) for control, so that the projection apparatus 20 (or the terminal apparatus 30) receives a corresponding control signal. After the projection apparatus 20 (or the terminal apparatus 30) receives the control signal, the control signal is transmitted to the artificial intelligence model 10 through the cloud server 40. The artificial intelligence model 10 generates a third standard command according to the control signal and the rule command, and transmits the third standard command to the cloud server 40. The cloud server 40 transmits the third standard command to the projection apparatus 20. The projection apparatus 20 executes a third operation according to the third standard command after receiving the third standard command. The third operation includes, for example, stopping driving the speaker 250 to emit the sound signals and driving the projection module 220 to adjust the display brightness to be dimmed.

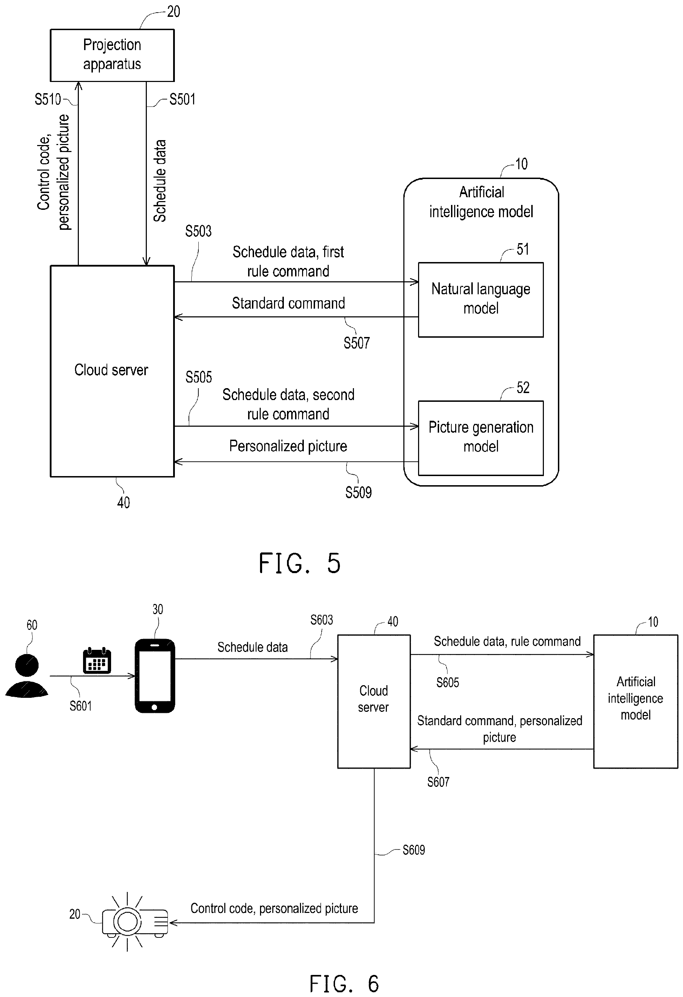

FIG. 5 is a schematic diagram of a projection system according to a third embodiment of the disclosure. Please refer to FIG. 5. This embodiment is an application example of the first embodiment. The artificial intelligence model 10 also includes a natural language model 51 and a picture generation model 52. The rule command includes a first rule command and a second rule command. The natural language model 51 is configured to generate the standard command according to the schedule data and the first rule command. The picture generation model 52 is configured to generate the personalized picture according to the schedule data and the second rule command.

The natural language model 51 may be any pre-trained chatbot such as Chat Generative Pre-trained Transformer (ChatGPT), Microsoft Bing, Google Bard, or ERNIE Bot or may be a specialized chatbot trained on domain-specific data. The picture generation model 52 is, for example, any trained smart picture generation model such as Jasper Art, Midjourney, DALL-E2, DALL-E3, Stability AI DreamStudio, Wombo, and Stable Diffusion. The natural language model 51 and the picture generation model 52 may also be other trained models. The natural language model 51 and the picture generation model 52 may be disposed in the cloud server 40 or a third-party cloud server and are executed by a processor of the cloud server 40 or the third-party cloud server.

In the embodiment, the user inputs the schedule data into the projection apparatus 20. Afterwards, as shown in Step S501, the projection apparatus 20 transmits the schedule data to the cloud server 40. In Step S503, the cloud server 40 transmits the schedule data and the first rule command to the natural language model 51 to generate the standard command through the natural language model 51. In Step S505, the cloud server 40 transmits the schedule data and the second rule command to the picture generation model 52 to generate the personalized picture through the picture generation model 52.

In Step S507, the cloud server 40 receives the standard command from the natural language model 51. In Step S509, the cloud server 40 receives the personalized picture from the picture generation model 52. The cloud server 40 transmits the control code and the personalized picture to the projection apparatus 20 in Step S510 after converting the standard command into the control code executable by the projection apparatus 20.

In an embodiment, the standard command generated through the natural language model 51 according to the schedule data and the first rule command includes instructing the projection apparatus 20 to project the reminder item corresponding to the schedule data. The picture generation model 52 is configured to generate the personalized picture according to the schedule data, the second rule command, and the reminder item.

The first rule command is configured to limit the natural language model 51 to generate the standard command conforming to the schedule data and executable by the projection apparatus 20 for the schedule data. The first rule command and the second rule command may be stored in the cloud server 40 in advance or the second rule command may be generated through the natural language model 51. That is, while generating the standard command according to the schedule data and the first rule command from the cloud server 40, the natural language model 51 also generates the second rule command, and the natural language model 51 transmits the second rule command to the cloud server. 40. The cloud server 40 transmits the second rule command to the picture generation model 52, so that the picture generation model 52 generates the personalized picture according to the schedule data and the second rule command, and then transmits the personalized picture to the cloud server 40.

For example, the first rule command also includes "please generate a drawing command readable by the picture generation model according to keywords of the schedule data". The drawing command is the second rule command. For example, when the natural language model 51 analyzes that the keywords of the schedule data are related to Christmas, the second rule command generated through the natural language model 51 is, for example, "please generate a picture related to Christmas".

FIG. 6 is a schematic diagram of a projection system according to a fourth embodiment of the disclosure. Please refer to FIG. 6. This embodiment is an application example of the first embodiment. In Step S601, a user 60 may use the terminal apparatus 30 to input the schedule data, and in Step S603, the terminal apparatus 30 transmits the schedule data to the cloud server 40. In Step S605, the cloud server 40 transmits the schedule data and the rule command to the artificial intelligence model 10. Through the artificial intelligence model 10, the standard command and/or the personalized picture are generated.

Next, in Step S607, the artificial intelligence model 10 transmits at least one of the standard command and the personalized picture to the cloud server 40. Through the cloud server 40, the standard command is converted into the control code executable by the projection apparatus 20. Afterwards, in Step S609, the cloud server 40 transmits the control code and the personalized picture to the projection apparatus 20.

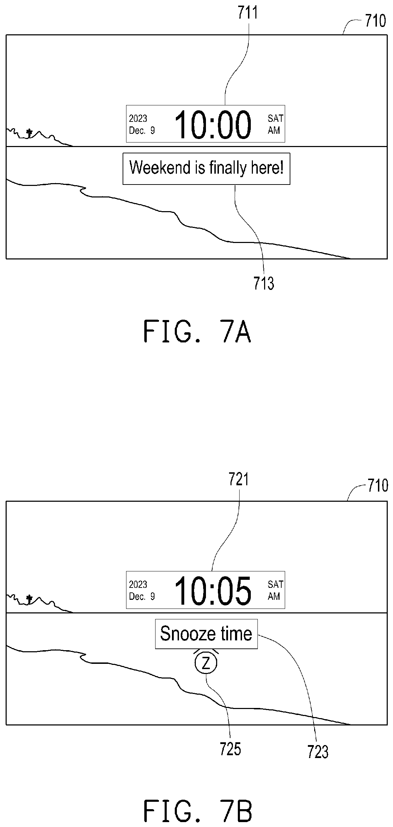

In an embodiment, a function of using the projection apparatus 20 as an AI smart alarm may be further implemented through the projection system 100, which will be described below with reference to FIG. 7A to FIG. 7C.

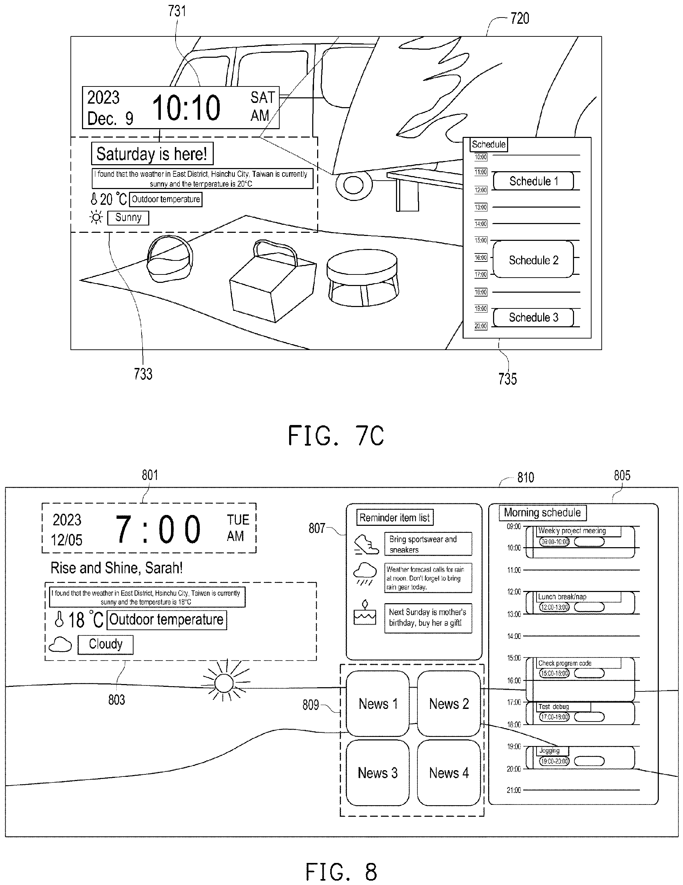

FIG. 7A is a schematic diagram of a personalized picture corresponding to an alarm event according to a fifth embodiment of the disclosure. FIG. 7B is a schematic diagram of a personalized picture corresponding to a snooze mode according to the fifth embodiment of the disclosure. FIG. 7C is a schematic diagram of a personalized picture corresponding to a schedule event according to the fifth embodiment of the disclosure. The fifth embodiment is an application example of the first embodiment. In the fifth embodiment, it is assumed that the user uses the terminal apparatus 30 or the projection apparatus 20 to set an alarm event in advance to wake up at 10:00 am on Saturday, December 9, 2023 (the first specified time is 10:00 am on Saturday), and set multiple schedule events (including multiple corresponding schedule times) on Saturday.

The cloud server 40 transmits the schedule data (including the alarm event and the schedule events) to the artificial intelligence model 10. Then, the artificial intelligence model 10 generates the first standard command and an alarm picture 710 (a first picture) corresponding to the alarm event, and generates the second standard command and a schedule picture 720 (a second picture) corresponding to the schedule events. The cloud server 40 respectively converts the first standard command and the second standard command into corresponding control codes.

At 10:00 am on Saturday, December 9, 2023, the cloud server 40 transmits the alarm picture 710 and the first standard command to the projection apparatus 20. For example, the first standard command includes commands for instructing the projection apparatus 20 to execute the wake-up action, the alarm playback action, the brightness adjustment action, and the wallpaper changing action. After the projection apparatus 20 performs the wake-up action (is powered on) according to the first standard command, the processor 210 controls the projection module 220 to perform the brightness adjustment action to gradually change the brightness of the light source from dim to bright. Then, the wallpaper changing action is executed to project the alarm picture 710, and the alarm playback action is executed to drive the speaker 250 to play an alarm sound effect. For example, the light source of the projection apparatus 20 may be adjusted to simulate a sunrise effect, and the intensity of the brightness of the light source is gradually increased to wake the user in a more natural way.

As shown in FIG. 7A, the projection apparatus 20 uses the alarm picture 710 as a wallpaper. The first standard command may also include instructing the projection apparatus 20 to execute the reminder item playback action, such as displaying a current time 711 and a text message 713 corresponding to the alarm event on the alarm picture 710.

During the process of playing the alarm sound effect, if the projection apparatus 20 receives a control signal of the user intending to enter the snooze mode, the projection apparatus 20 transmits the control signal to the artificial intelligence model 10. The artificial intelligence model 10 generates the third standard command according to the control signal and the rule command, and transmits the third standard command to the cloud server 40 to convert the third standard command into a control code, and then transmits the control code to the projection apparatus 20. The control signal may be a text signal, a voice signal, a touch signal, etc. The user may transmit a command to enter the snooze mode to the projection apparatus 20 by voice, text, or touching the screen or the user may transmit the command to the terminal apparatus 30, and the terminal apparatus 30 transmits the received control signal to the artificial intelligence model 10 through the cloud server 40. The third standard command includes, for example, parameters for instructing the projection apparatus 20 to change the display brightness and/or the sound signals, such as pausing the speaker 250 from playing the alarm sound effect and/or reducing the brightness of the projection module 220, and executing the brightness adjustment action and the alarm playback action again after 10 minutes.

As shown in FIG. 7B, in the snooze mode, after the projection apparatus 20 receives the control code corresponding to the third standard command, the processor 210 controls the projection module 220 to perform the brightness adjustment action to gradually change the brightness of the light source from bright to dim. The reminder item displayed on the alarm picture 710 through the projection apparatus 20 may include a current time 721, a text message 723 corresponding to the snooze mode, and an alarm icon 725, and this state is maintained for 10 minutes. After 10 minutes (that is, at 10:10 am), the brightness of the light source of the projection module 220 is controlled to gradually change from dim to bright, and the alarm playback action is executed to drive the speaker 250 to play the alarm sound effect.

As shown in FIG. 7C, at 10: 10 am on Saturday, December 9, 2023, the cloud server 40 transmits the second standard command and the schedule picture 720 to the projection apparatus 20. For example, the second standard command includes commands for instructing the wallpaper changing action and the reminder item playback action. Through the projection apparatus 20, the processor 210 controls the projection module 220 to execute the wallpaper changing action and the reminder item playback action.

In the embodiment, the projection system 100 may utilize the artificial intelligence model 10 to create a personalized wallpaper according to the schedule data of the user, time zone data, etc., and display various reminder items on the wallpaper in the form of an information wall. The projection apparatus 20 or the terminal apparatus 30 may learn a current location of the user by a global positioning system (GPS), thereby learning the time zone data. The projection apparatus 20 or the terminal apparatus 30 may transmit the time zone data to the cloud server 40, and the cloud server 40 obtains weather information corresponding to the time zone data according to the received time zone data. For example, in FIG. 7C, the projection apparatus 20 uses the schedule picture 720 as the wallpaper, and the reminder items displayed on the schedule picture 720 include a current time 731, a text message 733 related to the weather information, a schedule list 735, etc. The text message 733 related to the weather information may be configured to display the real-time weather information of the current location of the user, so as to let the user to understand local weather conditions.

FIG. 8 is a schematic diagram of a personalized picture according to a sixth embodiment of the disclosure. The sixth embodiment is an application example of the first embodiment. In the sixth embodiment, it is assumed that the user uses an application program of the terminal apparatus 30 or the projection apparatus 20 to set a wake-up time of working days (Monday to Friday) to 7:00 am. The terminal apparatus 30 or the projection apparatus 20 obtains the schedule data of tomorrow (assumed to be December 5, 2023). The cloud server 40 transmits the alarm event including the wake-up time and the subsequent schedule event to the artificial intelligence model 10. The artificial intelligence model 10 generates a corresponding standard command and a personalized picture 810 according to the alarm event and the schedule event. The cloud server 40 converts the standard command into a corresponding control code.

At 7:00 am on Thursday, December 5, 2023 (the wake-up time previously set by the user), the cloud server 40 transmits the personalized picture 810 and the control code to the projection apparatus 20, so that the projection apparatus 20 performs the wake-up action. Then, the processor 210 controls the projection module 220 to perform the brightness adjustment action to gradually change the brightness of the light source from dim to bright, then projects the personalized picture 810 and the reminder items, and executes the alarm playback action to drive the speaker 250 to play the alarm sound effect.

As shown in FIG. 8, the projection apparatus 20 uses the personalized picture 810 as the wallpaper. The artificial intelligence model 10 may provide relevant information of a schedule location according to the schedule data and the time zone data. The relevant information includes the weather information, traffic information, news information, etc. The relevant information may be, for example, obtained by searching the Internet. The rule command of the embodiment includes the standard command of the artificial intelligence model 10 generating the relevant information of the schedule location according to the schedule data and the time zone data. For example, the reminder items displayed on the personalized picture 810 may include a time 801, a text message 803 related to the weather information, a schedule list 805, a reminder item list 807 corresponding to the schedule data, and news information 809 of the day.

The artificial intelligence model 10 may generate the reminder item according to the schedule data and the weather information of the day. For example, a schedule event included in the schedule data is "jogging", and the artificial intelligence model 10 generates a reminder item of recommending to bring sportswear and sneakers, and a schedule event included in the schedule data within the next week (or within a specified time such as a month) is "birthday", and the artificial intelligence model 10 generates a recommended reminder item corresponding to the schedule event. Alternatively, the weather information of the day is "rainy", and the artificial intelligence model 10 generates a reminder item of recommending to bring a rain gear, and the weather information of the day is "sunny", and the artificial intelligence model 10 generates a reminder item of recommending to use a sunscreen product.

The standard command may further instruct the projection apparatus 20 to project an unplanned schedule reminder item. For example, the artificial intelligence model 10 obtains a specific behavior performed by the user at a specific time according to multiple historical schedule data of the user. That is, the artificial intelligence model 10 may learn the schedule or the routine of the user according to the historical schedule data. After the artificial intelligence model 10 receives the schedule data, in response to the schedule data not including the specific behavior at the specific time, the artificial intelligence model 10 generates at least one of the standard command and the personalized picture corresponding to the specific behavior according to the specific behavior and the rule command. Accordingly, the projection system 100 may generate the reminder item according to the schedule or the routine of the user, and the projection apparatus 20 may project the corresponding personalized picture and execute an operation (such as issuing a reminder notification) corresponding to the reminder item at the specific time.

For example, the artificial intelligence model 10 analyzes the specific behavior in the historical schedule data that a certain day of each month is the payday. Then, in the next month, even if the user does not actively input the schedule event related to the payday, the artificial intelligence model 10 may still automatically generate the reminder item of today being the payday and the relevant personalized picture for the projection apparatus 20 to project on the day of the payday. For another example, the artificial intelligence model 10 analyzes the specific behavior in multiple historical schedule data that a regular health check-up is done in a certain month of each year, the artificial intelligence model 10 may automatically generate a reminder item related to the health check-up in that month.

The artificial intelligence model 10 may obtain a parameter setting content corresponding to the projection apparatus 20 in each of multiple usage states, such as the parameter setting content corresponding to the projection apparatus 20 in a movie mode and the parameter setting content corresponding to a presentation mode, according to multiple historical schedule data. Afterwards, after receiving the schedule data, the artificial intelligence model 10 obtains the parameter setting content corresponding to the usage state consistent with the schedule data from the historical schedule data, and then generates the standard command according to the parameter setting content of the historical schedule data and the rule command. For example, when the schedule data received through the natural language model 51 of the artificial intelligence model 10 is using the projection apparatus 20 to watch a movie, the natural language model 51 analyzes the schedule data of the user 60 according to the historical schedule data as state data of the movie mode of the projection apparatus 20 when watching a movie. The natural language model 51 may generate the standard command (the projection mode adjustment action) to switch a projection mode of the projection apparatus 20 to the movie mode at the schedule time corresponding to the schedule data. The parameter setting content of the movie mode is, for example, the parameter setting content of relevant parameters of the projection apparatus 20 in the movie mode in which the user 60 previously watched a movie, which may achieve a personalized effect of the projection mode. The cloud server 40 may associate the historical schedule data of the user 60 with the state data of the projection apparatus 20 at the schedule time corresponding to the historical schedule data to be used as the content of the first rule command. When the user 60 inputs new schedule data, the first rule command is transmitted to the natural language model 51. The first rule command of the embodiment, for example, instructs the natural language model 51 to generate the standard command for adjusting the state data of the projection mode of the projection apparatus 20 according to the historical schedule data.

The projection apparatus 20 may also transmit the state data of the projection apparatus 20 to the cloud server 40. The state data is, for example, parameters such as brightness, color gamut, and volume currently set by the projection apparatus 20. The cloud server 40 may obtain at least one of the weather information and the traffic information corresponding to the time zone data according to the received time zone data. The cloud server 40 transmits at least one of the time zone data, the state data, the weather information, and the traffic information to the artificial intelligence model 10.

The artificial intelligence model 10 may further generate at least one of the standard command and the personalized picture according to at least one of the time zone data, the state data, the weather information, and the traffic information, the schedule data, and the rule command.

The traffic information is, for example, real-time traffic data, which may be obtained through the terminal apparatus 30, the projection apparatus 20, or the cloud server 40. The artificial intelligence model 10 may utilize the real-time traffic data to generate the most efficient route for commute (route with shorter commuting time and/or fewer transfers) of the day corresponding to the schedule data. The standard command includes instructing the projection apparatus 20 to display the most efficient route. Accordingly, the user may save time. A commuting manner includes a car, a public transportation, a motorcycle, a bicycle, walking, etc.

The natural language model 51 of the artificial intelligence model 10 is configured to generate the standard command according to the schedule data, the time zone data, the state data, and the first rule command. The first rule command includes "please analyze the schedule data, and generate the standard command according to the time zone data and the state data". The standard command may include providing the schedule of the day, upcoming important festivals, the weather information of the schedule location, the traffic information, local news information, and the commuting time, a commuting route, etc., and generating the appropriate state data of the projection apparatus corresponding to the schedule data and the time zone data.

The artificial intelligence model 10 may give the user the reminder items of different schedule recommendations according to different situations (working day or holiday). If the schedule event included in the schedule data is "trip", the reminder item corresponding to the standard command generated through the artificial intelligence model 10 may be, for example, a trip route recommendation, which includes recommended attractions and stopovers to enhance the trip experience of the user. If the schedule event included in the schedule data is "work", the reminder item corresponding to the standard command generated by the artificial intelligence model 10 may be, for example, the most efficient commuting route, such as a route with the shortest distance, a route with the fastest commuting time, and a route with the least number of transfers.

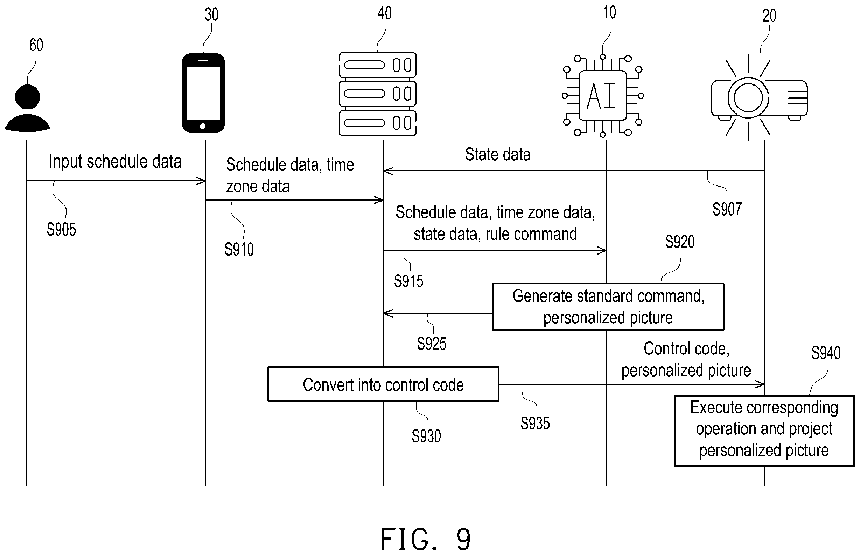

FIG. 9 is a schematic diagram of a control flow of a projection system according to a seventh embodiment of the disclosure. Please refer to FIG. 9. In Step S905, the user 60 inputs the schedule data. In an embodiment, the user 60 opens an application (for example, an AI assistant application) of the terminal apparatus 30, authorizes the application to obtain permissions for a calendar application and/or an alarm application of the terminal apparatus 30 and obtain a permission for the location of the terminal apparatus 30. In an embodiment, the user 60 opens a voice input interface of the calendar application, so that a processor of the terminal apparatus 30 activates a sound collecting apparatus (for example, a microphone). The user 60 inputs the schedule data by voice. The schedule data includes information such as participants, the alarm event, the schedule event, the schedule time, the location, and relevant objects related to the schedule. For example, the alarm event is "when to wake up?", etc. Alternatively, the schedule may be input in text form by a text input interface of the calendar application.

Alternatively, the user 60 may directly input a command for modifying the schedule by the voice input interface or the text input interface of the AI assistant application. For example, the originally planned alarm event is to wake up at 8:00 am. When the projection apparatus 20 plays the alarm picture (for example, the alarm picture 710 shown in FIG. 7A) and the alarm sound effect, the user 60 may input by voice or select the "snooze mode" of the AI assistant application, so that the terminal apparatus 30 generates a control signal to modify the originally planned wake-up time and adjust the alarm playback action to 8: 10 am. The details may be analogized with the description of FIG. 7A and FIG. 7B.

In Step S907, the projection apparatus 20 transmits the state data to the cloud server 40. In Step S910, the terminal apparatus 30 transmits the schedule data and the time zone data to the cloud server 40. The terminal apparatus 30 transmits the schedule data of the calendar application, the state data of the projection apparatus 20, and the time zone data of the terminal apparatus 30 to the cloud server 40 through the AI assistant application. In an embodiment, the terminal apparatus 30 may be set to transmit the schedule data, the time zone data, and the state data to the cloud server 40 when receiving the schedule data input by the user 60. In another embodiment, the terminal apparatus 30 may also be set to transmit the schedule data, the time zone data, and the state data to the cloud server 40 every fixed time interval.

In Step S915, the cloud server 40 transmits the schedule data, the time zone data, the state data, and the rule command to the artificial intelligence model 10. The step of the cloud server 40 receiving and storing the time zone data may also be achieved by having the user 60 authorize the permission for the location of the projection apparatus 20, and the projection apparatus 20 transmitting the time zone data to the cloud server 40.

In Step S920, the artificial intelligence model 10 generates the standard command and the personalized picture according to the schedule data, the time zone data, the state data, and the rule command. In Step S925, the artificial intelligence model 10 transmits the standard command and the personalized picture to the cloud server 40.

In the embodiment, while generating the standard command according to the schedule data, the time zone data, the state data, and the first rule command, the natural language model 51 also generates the second rule command. For example, the first rule command further includes "please generate the drawing command readable by the picture generation model according to the keywords of the schedule data, the time zone data, and the corresponding reminder item". The drawing command is the second rule command. The picture generation model 52 generates the personalized picture according to the second rule command.

In an embodiment, the natural language model 51 may analyze and extract the keywords in the schedule data to learn the daily schedule or the schedule of the day of the user 60, thereby providing the reminder item. The first rule command includes the standard command for instructing the natural language model 51 to generate the corresponding reminder item according to the schedule data and the time zone data. For example, the standard command generated through the natural language model 51 may enable the projection apparatus 20 to project the schedule of the entire day (for example, the schedule list 735 of FIG. 7C and the schedule list 805 of FIG. 8) at the wake-up time of the user 60, so that the user 60 can clearly know the upcoming schedule events.

In an embodiment, the schedule data may include the important festivals, such as Christmas, Chinese New Year, Father's Day, Mother's Day, and other festivals, birthdays of relatives and friends, etc., in the next few days (one week, two weeks, one month, etc.). The standard command generated by the natural language model 51 may enable the projection apparatus 20 to project the reminder item to remind the user 60 on the day of the important festival and a few days before the important festival.

For example, the natural language model 51 determines that Christmas is in five days according to the schedule data. The standard command generated by the natural language model 51 may include enabling the projection apparatus 20 to project the reminder item such as multiple objects that are most suitable as Christmas gifts and/or multiple restaurants at the place of the user 60 that are suitable for celebrating Christmas.

For example, the natural language model 51 determines that the birthday of a family member is in three days according to the schedule data. The standard command generated by the natural language model 51 may include enabling the projection apparatus 20 to project the reminder item for reminding the user 60 to prepare a gift and/or reserve a restaurant, etc. On the birthday of the family member, the standard command generated by the natural language model 51 includes enabling the projection apparatus 20 to project the reminder item for reminding the user 60 to bring the gift when going out. If the schedule data also includes the meal time and the location on the birthday of the family member, the standard command also includes enabling the projection apparatus 20 to project the reminder item of meal information on that day.

In an embodiment, the natural language model 51 of the artificial intelligence model 10 determines that the users 60 is staying at the same place today according to the schedule data. The standard command generated by the natural language model 51 may enable the projection apparatus 20 to project the weather information, the traffic information, and the news information 809 of the place, and the reminder item list 807 is generated according to the weather information, the traffic information, and the news information 809. For example, if the news information 809 contains news involving harm (for example, a terrorist attack, a war, etc.) to local people, the natural language model 51 may generate the reminder item for recommending not to go out today or to be careful when going out.

In an embodiment, the natural language model 51 of the artificial intelligence model 10 determines the destination of the user 60 today according to the schedule data, thereby obtaining the weather information, the traffic information, and local news of the destination, so as to generate the reminder item accordingly. For example, the standard command instructs the projection apparatus 20 to project the weather of the trip destination to assist the user in making an appropriate schedule plan. Alternatively, the standard command may include instructing the projection apparatus 20 to project the reminder items of weather changes, the optimal commuting route, commuting manners, and the commuting time between the original location and the destination.

In an embodiment, the natural language model 51 may determine that the user 60 is about to have a trip plan according to the schedule data. The standard command generated by the natural language model 51 may be to enable the projection apparatus 20 to project the reminder item. The reminder item may include recommended trip schedule, tourist attractions, trip routes, and other reminder items such as recommended clothing and objects to be brought generated according to the weather information of the trip location.

In an embodiment, the natural language model 51 may change the relevant parameters of the state data of the projection apparatus 20 according to the state data and the schedule data of the projection apparatus 20. For example, the standard command includes gradually changing the brightness of the light source of the projection module 220 of the projection apparatus 20 from dim to bright, changing the volume of the alarm sound effect played through the projection apparatus 20 from low to high, etc. The first rule command of the embodiment includes instructing the natural language model 51 to generate the standard command for adjusting the state data of the projection apparatus 20 according to the state data and the schedule data.

In an embodiment, the natural language model 51 may change the relevant parameters of the state data of the projection apparatus 20 according to the state data of the projection apparatus 20 and the historical schedule data. For example, the natural language model 51 analyzes that the user 60 often adjusts to the "snooze mode" multiple times after the alarm sound effect rings in the historical schedule data, causing the next schedule event after the alarm event on that day to be missed. Accordingly, the natural language model 51 may automatically generate the standard command for the projection apparatus 20 to increase the brightness of the light source and the volume of the alarm sound effect when there are other schedule events following the alarm event, so as to assist the user 60 in not delaying the next schedule event. The first rule command of the embodiment includes instructing the natural language model 51 to generate the standard command for adjusting the state data of the alarm mode of the projection apparatus 20 according to the historical schedule data. In other embodiments, the projection system 100 may ring some time in advance after the authorization and consent of the user to ensure that the user can wake up in time.

In an embodiment, the natural language model 51 may change the relevant parameters of the state data of the projection apparatus 20 according to the state data of the projection apparatus 20 and the time zone data. For example, the natural language model 51 analyzes that the local time zone is currently at night, and the standard command generated by the natural language model 51 may include reducing the display brightness of the projection module 220 of the projection apparatus 20. The first rule command of the embodiment includes instructing the natural language model 51 to generate the standard command for adjusting the state data of the projection mode of the projection apparatus 20 according to the state data and the time zone data.

The picture generation model 52 may generate the personalized picture according to keywords of the schedule data and the time zone data. The second rule command of the embodiment includes instructing the picture generation model 52 to generate a command for the personalized picture according to the schedule data and the time zone data. The personalized picture may conform to the schedule of the day or the upcoming important holiday. For example, the alarm event included in the schedule data is set to wake up at 8:00 am, and the personalized picture generated by the picture generation model 52 is a landscape picture that conforms to the weather of the local time zone. For example, the schedule event included in the schedule data is set to a meeting at 2:00 pm, and the personalized picture generated by the picture generation model 52 is a picture that conforms to the meeting situation. For example, the schedule event included in the schedule data is set to a trip to a certain place, and the personalized picture generated by the picture generation model 52 is a picture with a local tourist attraction.

In an embodiment, the natural language model 51 may be communicatively connected to the picture generation model 52, and the picture generation model 52 may further generate the personalized picture according to the reminder item generated by the natural language model 51. In the embodiment, the second rule command includes instructing the picture generation model 52 to generate the command for the personalized picture according to the schedule data, the time zone data, and the reminder item included in the standard command. For example, the reminder item generated by the natural language model 51 is that today is the payday, and the picture generation model 52 may generate a personalized picture about money on the payday to be used as the wallpaper of the projection apparatus 20.

Returning to FIG. 9, in Step S930, the cloud server 40 converts the received standard command into the control code. In Step S935, the cloud server 40 transmits the control code and the personalized picture to the projection apparatus 20. In Step S940, the projection apparatus 20 executes the control code to implement the corresponding operation, and projects the personalized picture.

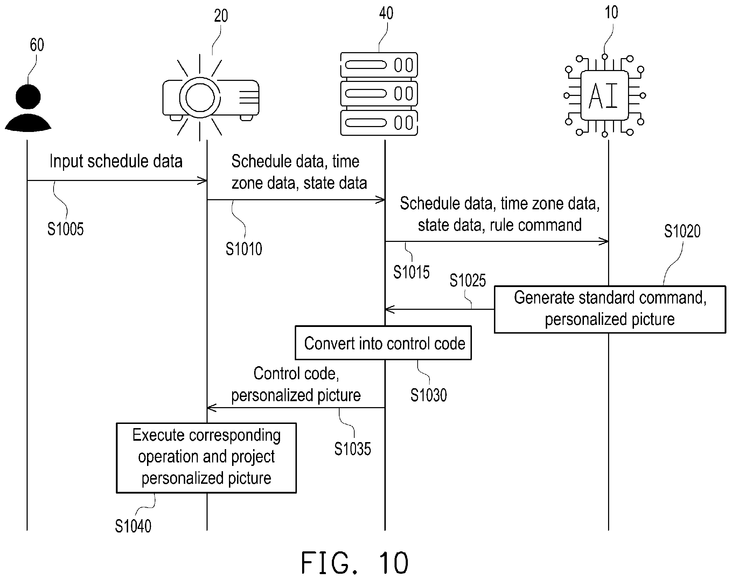

FIG. 10 is a schematic diagram of a control flow of a projection system according to an eighth embodiment of the disclosure. This embodiment is an application example of the first embodiment. Please refer to FIG. 10. In Step S1005, the user 60 inputs the schedule data into the projection apparatus 20 through input devices such as a keyboard, remote control, or on-screen display (OSD). In Step S1010, the projection apparatus 20 transmits the schedule data, the time zone data, and the state data to the cloud server 40. In Step S1015, the cloud server 40 transmits the schedule data, the time zone data, the state data, and the rule command (the first rule command and the second rule command) to the artificial intelligence model 10.

In Step S 1020, the artificial intelligence model 10 generates the standard command and the personalized picture according to the schedule data, the time zone data, the state data, and the rule command. In Step S 1025, the artificial intelligence model 10 transmits the standard command and the personalized picture to the cloud server 40. In Step S1030, the cloud server 40 converts the standard command into the control code. In Step S1035, the cloud server 40 transmits the control code and the personalized picture to the projection apparatus 20. In Step S1040, the projection apparatus 20 executes the control code to implement the corresponding operation, and projects the personalized picture.

In other embodiments, in the state where the projection apparatus 20 is powered off, the AI assistant of the terminal apparatus 30 may control the projection apparatus 20 to be powered on in conjunction with the cloud server 40. For example, in Steps S601 to S609 shown in FIG. 6, the schedule data provided by the terminal apparatus 30 is transmitted to the artificial intelligence model 10 through the cloud server 40, and after the artificial intelligence model 10 generates the standard command and/or the personalized picture, the cloud server 40 transmits the control code and/or the personalized picture converted by the standard command to the projection apparatus 20 to wake up the projection apparatus 20 to perform the corresponding operation. Subsequently, the projection apparatus 20 may provide the schedule data to control the operation of the projection apparatus 20, as shown in Steps S501 to S510 in FIG. 5.

In summary, the disclosure may provide the personalized reminder service and actively perform a dynamic adjustment according to feedback and the schedule data of the user to provide a more personalized and more effective experience, so as to satisfy requirements of different users. The projection system may implement the concept of using the projection apparatus as the AI smart alarm by the artificial intelligence model.

The foregoing embodiments have the following advantages.
1. The function of the AI smart alarm may be optimized. The projection system may analyze the schedule data of the user to understand the work and activity time of the user. The projection system may automatically generate the standard command at the appropriate time according to the information to adjust the parameter setting content (power/brightness/sound) of the projection apparatus, so as to ensure that the user does not miss an important event or has a good rest.
2. Sound can be optimized. The projection system may analyze the level of preference of the user for different sounds to further optimize the sound playback effect of the projection apparatus.
3. Lighting can be controlled. The projection system may simulate the sunrise effect by adjusting the light source of the projection apparatus and gradually increasing the intensity of light rays to wake up the user in a more natural way. The projection system may record the response of the user to lighting (such as whether the user issues a command related to changing an icon or brightness) to adjust to the most appropriate brightness mode.
4. The personalized picture may be optimized. The projection system may predict the preferences and interests of the user according to the schedule data of the user, and automatically generate the relevant personalized picture. For example, the projection system analyzes that the user often goes to the zoo in the schedule data, and the projection system may infer that the user likes animals. Therefore, the projection system may generate the personalized picture according to a positive prompt "the user likes animals". The foregoing description of the preferred embodiments of the invention has been presented for objectives of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. Therefore, the term "the invention", "the disclosure" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be configured to interpret or limit the scope or meaning of the claims. Any advantages and benefits described may not apply to all embodiments of the invention. It should be appreciated that variations may be made in the embodiments described by persons skilled in the art without departing from the scope of the disclosure as defined by the following claims. Moreover, no element and component in the disclosure is intended to be dedicated to the public regardless of whether the element or component is explicitly recited in the following claims.

## Claims

1. A method of controlling a projection apparatus, comprising:
receiving (S305) schedule data through an artificial intelligence model (10) from a projection apparatus (20) or a terminal apparatus (30);
generating (S310) at least one of a standard command and a personalized picture through the artificial intelligence model (10) according to the schedule data and a rule command;
executing (S315) an operation corresponding to the schedule data through the projection apparatus (20) according to the standard command after receiving the standard command through the projection apparatus (20); and
projecting (S320) the personalized picture through the projection apparatus (20) after receiving the personalized picture through the projection apparatus (20).

2. The method of controlling the projection apparatus according to claim 1, wherein receiving (S305) the schedule data through the artificial intelligence model (10) from the projection apparatus (20) or the terminal apparatus (30) comprises:
transmitting the schedule data to a cloud server (40) through the projection apparatus (20) or the terminal apparatus, wherein the cloud server (40) stores the rule command; and
transmitting the schedule data and the rule command to the artificial intelligence model (10) through the cloud server (40).

3. The method of controlling the projection apparatus according to claim 1 or 2, wherein the artificial intelligence model (10) comprises a natural language model (51) and a picture generation model (52), the rule command comprises a first rule command and a second rule command, and generating at least one of the standard command and the personalized picture through the artificial intelligence model (10) according to the schedule data and the rule command further comprises:
generating the standard command through the natural language model (51) according to the schedule data and the first rule command; and
generating the personalized picture through the picture generation model (52) according to the schedule data and the second rule command.

4. The method of controlling the projection apparatus according to claim 3, wherein generating at least one of the standard command and the personalized picture through the artificial intelligence model (10) according to the schedule data and the rule command further comprises:
generating the standard command corresponding to a reminder item through the natural language model (51) according to the schedule data and the first rule command; and
generating the personalized picture through the picture generation model (52) according to the reminder item, the schedule data, and the second rule command.

5. The method of controlling the projection apparatus according to any one of the preceding claims, wherein the schedule data comprises a schedule time, the method of controlling the projection apparatus further comprising:
receiving the standard command and the personalized picture through a cloud server (40); and
transmitting the standard command and the personalized picture to the projection apparatus (20) at the schedule time corresponding to the schedule data through the cloud server (40).

6. The method of controlling the projection apparatus according to claim 5, wherein the schedule data comprises at least one of an alarm event and a schedule event, and generating at least one of the standard command and the personalized picture through the artificial intelligence model according to the schedule data and the rule command further comprises:
generating a first standard command and a first picture corresponding to the alarm event through the artificial intelligence model (10) according to the alarm event and the rule command; and
generating a second standard command and a second picture corresponding to the schedule event through the artificial intelligence model (10) according to the schedule event and the rule command;
wherein transmitting the standard command and the personalized picture to the projection apparatus (20) at the schedule time corresponding to the schedule data through the cloud server (40) further comprises:
transmitting the first standard command and the first picture to the projection apparatus (20) at a first specified time corresponding to the alarm event through the cloud server (40), and projecting the first picture and executing a first operation according to the first standard command after receiving the first standard command and the first picture through the projection apparatus (20), wherein the first operation comprises driving a speaker (250) to emit a sound signal and driving a projection module to adjust a display brightness; and
transmitting the second standard command and the second picture to the projection apparatus (20) at a second specified time corresponding to the schedule event through the cloud server, and projecting the second picture and executing a second operation according to the second standard command after receiving the second standard command and the second picture through the projection apparatus, wherein the second operation comprises driving the projection module (20) to adjust the display brightness and projecting a reminder item corresponding to the schedule event.

7. The method of controlling the projection apparatus according to claim 6, wherein after the projection apparatus (20) executes the operation according to the standard command, the method further comprises:
transmitting a control signal to the artificial intelligence model (10) through the cloud server (40) after the projection apparatus (20) or the terminal apparatus (30) receives the control signal;
generating a third standard command through the artificial intelligence model (10) according to the control signal and the rule command, and transmitting the third standard command to the cloud server (40); and
transmitting the third standard command to the projection apparatus (100) through the cloud server (40), and executing a third operation according to the third standard command (100) after receiving the third standard command through the projection apparatus.

8. The method of controlling the projection apparatus according to any one of the preceding claims, further comprising:
obtaining a parameter setting content corresponding to the projection apparatus (20) in each of a plurality of usage states through the artificial intelligence model (10) according to a plurality of historical schedule data;
wherein generating the standard command through the artificial intelligence model (10) according to the schedule data and the rule command comprises:
generating the standard command according to the parameter setting content and the rule command after obtaining the parameter setting content corresponding to one of the usage states consistent with the schedule data through the artificial intelligence model (10).

9. The method of controlling the projection apparatus according to any one of the preceding claims, wherein the operation comprises at least one of a wake-up action, an alarm playback action, a brightness adjustment action, a projection mode adjustment action, a reminder item playback action, and a wallpaper changing action.

10. The method of controlling the projection apparatus according to any one of the preceding claims, further comprising:
transmitting time zone data and state data of the projection apparatus (20) to a cloud server (40) through the projection apparatus (20) or the terminal apparatus;
obtaining at least one of weather information and traffic information corresponding to the time zone data through the cloud server (40) according to the received time zone data; and
transmitting at least one of the time zone data, the state data, the weather information, and the traffic information to the artificial intelligence model (10) through the cloud server.

11. The method of controlling the projection apparatus according to claim 10, wherein generating at least one of the standard command and the personalized picture through the artificial intelligence model (10) according to the schedule data and the rule command further comprises:
generating at least one of the standard command and the personalized picture through the artificial intelligence model (10) according to at least one of the time zone data, the state data, the weather information, and the traffic information, the schedule data, and the rule command.

12. The method of controlling the projection apparatus according to any one of the preceding claims, further comprising:
converting the standard command into a control code through a cloud server (40) after the cloud server (40) receives the standard command from the artificial intelligence model (10), and transmitting the control code to the projection apparatus (20); and
executing the control code through the projection apparatus (20) after receiving the control code through the projection apparatus (20), thereby executing the operation corresponding to the schedule data.

13. The method of controlling the projection apparatus according to any one of the preceding claims, , further comprising:
obtaining a specific behavior performed by a user at a specific time in the artificial intelligence model according to a plurality of historical schedule data of the user; and
in response to the schedule data not comprising the specific behavior at the specific time, generating at least one of the standard command and the personalized picture corresponding to the specific behavior through the artificial intelligence model according to the specific behavior and the rule command after the artificial intelligence model receives the schedule data.

14. A projection system, comprising:
a projection apparatus (20);
a terminal apparatus (30); and
an artificial intelligence model (10), respectively communicatively connected to the projection apparatus (20) and the terminal apparatus (300), wherein the artificial intelligence model (13 1/a3n is configured to receive schedule data from the projection apparatus or the terminal apparatus, and generate at least one of a standard command and a personalized picture according to the schedule data and a rule command, wherein
in response to the projection apparatus (20) receiving the standard command, the projection apparatus (20) is configured to execute an operation corresponding to the schedule data according to the standard command;
in response to the projection apparatus (20) receiving the personalized picture, the projection apparatus (30) is configured to project the personalized picture.

15. The projection system according to claim 14, further comprising a cloud server (40), communicatively connected to the artificial intelligence model (10), the projection apparatus (20), and the terminal apparatus (30), the cloud server (0) is configured to store the rule command and transmit the rule command and the schedule data from the projection apparatus or the terminal apparatus to the artificial intelligence model.
